# EUROPEAN PATENT SPECIFICATION

(11) **EP 0 920 217 B1**
(45) Date of publication and mention of the grant of the patent: **12.02.2003**
(21) Application number: 98121694.8
(22) Date of filing: 13.11.1998
(51) Int. Cl.: H04N 7/36

(54) **Method and apparatus for coding and for decoding a picture sequence**
Verfahren und Vorrichtung zur Codierung und zur Decodierung einer Bildsequenz
Procédé et dispositif pour le codage et le décodage d'une séquence d'images

(30) Priority: 25.11.1997 EP 97203687
(43) Date of publication of application: 02.06.1999
(73) Proprietor: DEUTSCHE THOMSON-BRANDT GMBH, 78048 Villingen-Schwenningen (DE)
(72) Inventor: Adolph, Dirk, 30952 Ronnenberg (DE); Blawat, Meinolf, 30161 Hannover (DE)
(74) Representative: Hartnack, Wolfgang, Dipl.-Ing.

(56) References cited:
- EP-A- 0 405 754
- EP-A- 0 416 918
- EP-A- 0 578 438
- EP-A- 0 622 959
- US-A- 5 218 435
- US-A- 5 331 348
- FUJIMURA M ET AL: "APPLICATION OF LEAKY PREDICTION TO AN INTERFRAME CODING SCHEME" ELECTRONICS & COMMUNICATIONS IN JAPAN, PART I - COMMUNICATIONS, vol. 80, no. 4, April 1997, pages 20-28, XP000692880

## Description

The invention relates to a method and an apparatus for coding and decoding a picture sequence.

### Prior Art

Predominantly motion-compensated hybrid codecs (encoder with simulated decoder contained therein) are used in data compression for moving picture sequences, such as e.g. in the MPEG1 or MPEG2 standard. By virtue of the regular insertion of intraframe-coded pictures (I frames), these compression methods enable access to any desired individual pictures in the entire bit stream or the playback of the bit stream from virtually any desired location. An intraframe-coded picture can be inherently individually decoded from the associated data and does not require any data from other pictures for the purpose of reconstruction. In contrast to this, interframe-coded pictures (P frames) cannot be inherently decoded but rather require in each case at least one reference picture for their reconstruction. This reference picture (anchor frame) must already have been decoded beforehand.

M. FUJIMURA et al: "Application of Leaky Prediction to an Interframe Coding Scheme", Electronics & Communications in Japan, Part 1 - Communications, vol.80, No.4, April 1997, pages 20-28, XP000692880, discloses picture coding using DCT transformation, 'leaky' prediction, interframe coding and intraframe coding.
EP-A-0405754 shows image subband coding, wherein a subpicture in a higher resolution band is predicted from the corresponding subpicture in the adjacent lower resolution band. The filtered subpictures are subsequently coded, transmitted and correspondingly decoded. There is a special initial picture in any sequence to be decoded.

By virtue of the insertion of intraframe-coded pictures into a video bit stream, each picture of a picture sequence could be decoded, starting from such an intraframe-coded picture, without the video bit stream of the entire picture sequence having to be decoded. Each intraframe-coded picture could be decoded immediately and each interframe-coded picture could be decoded by decoding the chronologically nearest preceding intraframe-coded picture and subsequently decoding the picture sequence as far as the desired interframe-coded target picture.

A disadvantage of such a method is the high bit outlay necessary for intraframe-coded pictures. The factor of the required bits for intraframe-coded pictures I to the required bits for singly forward-predicted interframe-coded pictures P is approximately 10:1 in the typical MPEG2 format (M=3; N=12). In this case, N is the interval separating one intraframe-coded picture from the next and M is the interval separating an I picture and the succeeding P picture - or vice versa - and the interval separating one P picture and the next P picture. Situated in between there may be B pictures, which may be bi-directionally predicted for example.

### Invention

The invention is based on the object of specifying a method for picture sequence coding and decoding in which it is possible to dispense with such I pictures transmission, but decoding from virtually any desired location in a picture sequence can nevertheless take place. This object is achieved by means of the methods specified in Claims 1 and 4.

The invention is based on the further object of specifying an apparatus for coding and for decoding a picture sequence with application of the method according to the invention. This object is achieved by means of the apparatuses specified in Claims 6 and 7.

As mentioned above, a codec usually contains a simulation of the receiver-end decoder. Coding errors thereof can thus also be taken into account by the encoder. The decoder simulation is usually arranged in a feedback loop of the hybrid codec. By virtue of the inventive insertion of an attenuation element into this feedback loop, the insertion and coding and the receiver-end decoding of intraframe-coded I pictures becomes superfluous. The attenuating element effects a decrease in amplitude values of predicted coefficients. The inventive attenuation in the feedback path of the hybrid codec therefore initially effects an artificial, actually undesirable deterioration in the prediction and leads to an increase in the prediction error to the coded. If the attenuation inserted in the feedback path is chosen suitably in terms of its size, however, then it is surprisingly possible to dispense entirely with the use of intraframe-coded pictures, without thereby losing the property of being able to decode the video bit stream at virtually any desired location.
The starting of the receiver-end decoding at any desired location in the bit stream or in a picture sequence occurs as follows: A grey-scale picture, preferably a grey-scale picture of average brightness, is used as the first prediction picture or as the reference picture. The first prediction error signal decoded in the receiver is combined with this grey-scale picture. The subsequent interframe-coded pictures are then decoded in a known manner. As a result of the insertion of the attenuation element in the encoder, the receiver-end reconstruction error generated in this way at the beginning is progressively reduced in the course of the decoding of the subsequent pictures since, on account of the attenuation element, errors which the encoder attempts to reduce have been artificially introduced in the encoder-end decoder function simulation as well.
The effect of the invention is that after the receiver-end decoding of L pictures, a viewer cannot perceive a difference between picture sequences which are coded in a known manner and contain I pictures at relatively short intervals, and picture sequences which are coded according to the invention and contain no I pictures B pictures may be arranged between the P pictures. The effect of these B pictures is no error propagation, on the one hand, but also no reduction of visible reconstruction errors, on the other hand.

The receiver-end video decoder can therefore display decoded pictures after the decoding of L pictures - or even a few pictures beforehand.
The value of the parameter L depends on the setting of the attenuation D of an attenuation element in the feedback of the codec and also determines the resulting bit rate. When L is small, the attenuation D is large and the convergence of the receiver-end decoding error is faster, but the bit rate is increased. When L is large, the attenuation D is small and the convergence of the receiver-end decoding error is slower, but the bit rate is low.

### Drawings

Exemplary embodiments of the invention are described with reference to the drawings, in which:
Figure 1 shows a known encoder for video data;
Figure 2 shows a decoder for video data;
Figure 3 shows an inventive encoder for video data.

### Exemplary Embodiment

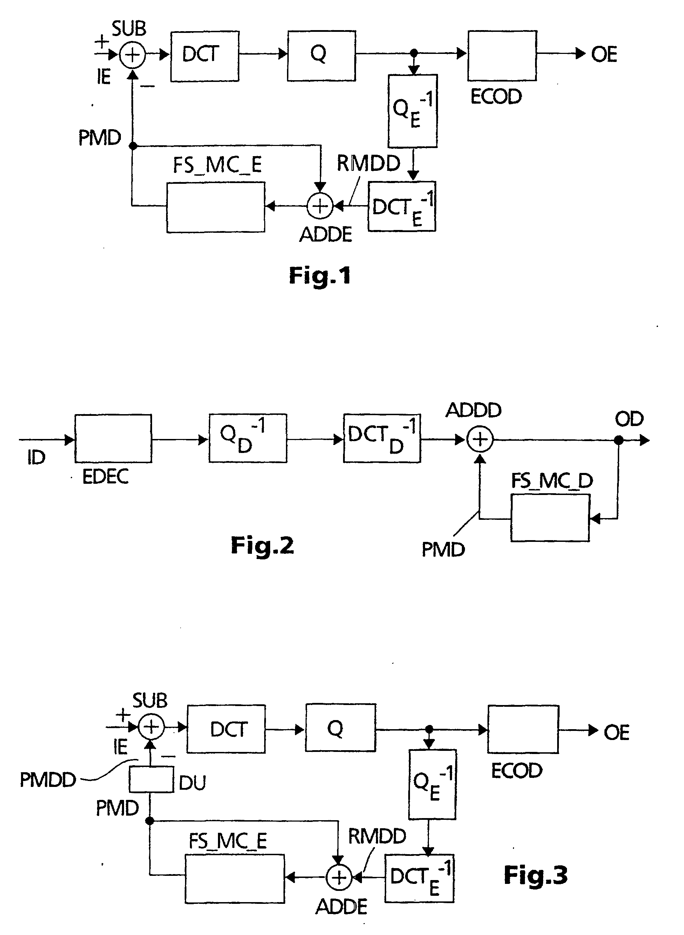

The video data input signal IE of the encoder in Figure 1 contains macroblock data for encoding. In the case of intraframe video data, a subtractor SUB simply allows these to pass. They are processed in discrete cosine transform means DCT and quantising means Q and are fed to an entropy encoder ECOD, which outputs the encoder video data output signal OE. ECOD can, for example, carry out Huffman coding for the coefficients and add header information and motion vector data.
In the case of interframe video data, predicted macroblock data PMD are subtracted from the input signal IE in the subtractor SUB and the difference data are fed to the entropy encoder ECOD via the discrete cosine transform means DCT and the quantising means Q. The output signal of Q is also processed in inverse quantising means Q_{E}⁻¹, the output signal of which is fed via inverse discrete cosine transform means DCT_{E}⁻¹ to the combiner ADDE in the form of reconstructed macroblock difference data RMDD. The output signal of ADDE is buffer-stored in a frame store in motion estimation and compensation means FS_MC_E, which carry out motion compensation for reconstructed macroblock data and output macroblock data PMD predicted in this way to the subtracting input of SUB and to the other input of the combiner ADDE. The quantising means Q, the inverse quantising means Q_{E}⁻¹ and ECOD for example, are controlled by the occupancy level of the encoder buffer ENCB.
Q_{E}⁻¹, DCT_{E}⁻¹, ADDE and FS_MC_E constitute a simulation of the receiver-end decoder, which is also described in connection with Figure 2.

In Figure 2, the video data input signal ID is fed via entropy decoder means EDEC, inverse quantising means Q_{D}⁻¹ and inverse discrete cosine transform means DCT_{D}⁻¹ to a combiner ADDD, which outputs the video data output signal OD. EDEC can, for example, carry out Huffman decoding for the coefficients and decode and/or evaluate header information and motion vector data.

Q_{E}⁻¹ and Q_{D}⁻¹, DCT_{E}⁻¹ and DCT_{D}⁻¹ and ECOD have a function which is the corresponding inverse of the function of Q, DCT and ECOD. The output signal of ADDD is buffer-stored in a frame store in motion compensation means FS_MC_D. FS_MC_D effects a motion compensation for reconstructed macroblock data.

In known decoders, the macroblock data PMD predicted in FS_MC_D are passed to the second input of the combiner ADDD only in the case of interframe-decoded macroblock data. In the case of intraframe-decoded macroblock data, the combiner ADDD simply passes on the output signal from DCT_{D}⁻¹.

In decoders according to the invention, which receive no intraframe-coded I pictures, the macroblock data PMD predicted in FS_MC_D are always passed to the second input of the combiner ADDD. Therefore, such a decoder according to the invention can in this respect be constructed more simply than known decoders. Detection as to whether intraframe-coded or interframe-coded video data are present can be obviated. A changeover for ADDD between the two modes can likewise be obviated. At the beginning of a picture sequence decoding, FS_MC_D or another unit only has to generate grey-scale picture data for a decoding starting picture for the second input of ADDE or in ADDD itself. In terms of digital image processing, however, this only means interrogating or passing on a fixedly set numerical value, that is to say a minimal outlay. Then, for example not until after a defined number of decoded pictures, output OD can output an output picture which is visible to a viewer. Until then, the picture may be blanked or a grey-scale value, preferably the starting grey-scale value mentioned above, may be displayed.

The starting grey-scale value may also be chosen adaptively, as a result of which convergence of the prediction errors can be achieved more rapidly. For example, if the DC difference coefficients of the macroblock data in the case of the current picture at the decoding starting instant have predominantly larger positive values, the starting grey-scale value can be chosen to be rather darker. If the DC difference coefficients of the macroblock data in the case of the current picture at the decoding starting instant have predominantly larger negative values, the starting grey-scale value can be chosen to be rather lighter. If the DC difference coefficients of the macroblock data in the case of the current picture at the decoding starting instant have predominantly small values, then an average brightness can rather be chosen for the starting grey-scale value.

The video data input signal IE of the encoder according to the invention in Figure 3 contains macroblock data for encoding.

In an embodiment of the encoder according to the invention, intraframe video data are never generated, rather only the attenuation according to the invention is used.

In this embodiment, predicted and attenuated macroblock data PMDD are subtracted from the input signal IE in the subtractor SUB and the difference data are fed to the entropy encoder ECOD via the discrete cosine transform means DCT and the quantising means Q. The output signal Q is also processed in inverse quantising means Q_{E}⁻¹, whose output signal is fed via inverse discrete cosine transform means DCT_{E}⁻¹ to the combiner ADDE in the form of reconstructed macroblock difference data RMDD. The output signal of ADDE is buffer-stored in a frame store in motion-estimation and compensation means FC_MC_E, which carry out motion compensation for reconstructed macroblock data and output macroblock data PMD predicted in this way to the other input of the combiner ADDE and, via an attenuation unit DU, to the subtracting input of SUB. The quantising means Q, the inverse quantising means Q_{E}⁻¹ and ECOD, for example, are controlled by the occupancy level of the encoder buffer ENCB. Q_{E}⁻¹, DCT_{E}⁻¹, ADDE and FS_MC_E once again constitute a simulation of the receiver-end decoder.

The attenuation unit DU reduces incoming pixel values for example by multiplication by a factor D. Small values of D lie in the range from 0.1 to 0.3, for example, and large values of D lie in the range from 0.5 to 0.9, for example. D preferably lies in the range from 0.4 to 0.8.
DU can also subtract only a constant value or additionally a constant value from all the pixel values, but the pixel values cannot become smaller than the black level or, in the case of chrominance signals, a value corresponding to the black level. A limiter can be used to ensure that the pixel values do not reach an impermissible value. D may differ when coding luminance and chrominance signals.

The invention can be used for example in the transmission of digital television signals or in the transmission of digital video signals in networks such as the Internet or in a videophone or in the course of recording or in the course of mastering optical or magnetic storage media, e.g. DVD and in the course of playback thereof.

## Claims

1. Method for coding a picture sequence (IE), wherein transformed (DCT) and quantised (Q) video data coefficients formed from difference values relating to block-format pixel values of the picture sequence are entropy-encoded (ECOD), with the transformed video data coefficients being subjected to inverse quantisation (Q_{E}⁻¹) and inverse transformation (DCT_{E}⁻¹), and being used in predicted form (FS_MC_E, ADDE) for the formation of the difference values relating to said pixel values, and wherein the predicted pixel values (PMD) are attenuated (DU) in terms of their amplitude prior to said formation (SUB) of the difference values, **characterised in that** the encoded picture sequence contains neither intraframe-coded pictures nor intraframe-coded pixel blocks.

2. Method according to claim 1, wherein said attenuation (DU) is effected by multiplication of said predicted pixel values by a predetermined factor.

3. Method according to claims 1 or 2, wherein said attenuation (DU) is effected by reduction of the absolute values of said predicted pixel values by a predetermined factor.

4. Method for decoding a picture sequence containing transformed and interframe-encoded video data coefficients (ID) formed from difference values relating to block-format pixel values of said picture sequence, wherein said encoded video data coefficients are entropy-decoded (EDEC), inversely quantised (Q_{D}⁻¹) and inversely transformed (DCT_{D}⁻¹) to provide pixel difference values that are combined (ADDD) with predicted (FS_MC_D) pixel values derived from previous pixel difference values, wherein said difference values on which said transformed and encoded video data coefficients are based are derived from predicted pixel values that were attenuated in terms of their amplitude, **characterised in that** said picture sequence contains neither intraframe-coded pictures nor intraframe-coded pixel blocks and that upon starting a decoding for the first picture, said inversely transformed (DCT_{D}⁻¹) pixel difference values are combined (ADDD) with pixel values of a decoder-generated grey picture.

5. Method according to claim 4, wherein said block-format pixel values form macroblocks containing DC difference coefficients and said grey picture pixel values of the decoding start picture are determined adaptively in particular such that, if the DC difference coefficients of the macroblock data of the decoding start picture have predominantly larger positive values, the corresponding starting grey-scale pixel values are chosen to be darker, whereas, if the DC difference coefficients of the macroblock data of the decoding start picture have predominantly larger negative values, the corresponding starting grey-scale pixel values are chosen to be brighter.

6. Apparatus for coding a picture sequence (IE), provided with:
- means (SUB) for forming pixel difference values, to which first input block-format pixel data of said picture sequence are fed;
- means (DCT, Q) for transforming and quantising said pixel difference values to provide video data coefficients;
- an entropy-encoder (ECOD) for said video data coefficients to provide encoded video data coefficients (OE);
- means (Q_{E}⁻¹, DCT_{E}⁻¹) for inversely quantising and inversely transforming said video data coefficients to provide reconstructed pixel difference values;
- means (FS_MC_E, ADDE) for forming predicted pixel values (PMD) from said reconstructed pixel difference values;
- an attenuation unit (DU) for attenuating said predicted pixel values (PMD) before they are fed to a second input of said means (SUB) for forming pixel difference values, **characterised in that** in the encoded video data coefficients (OE) output from said entropy-encoder (ECOD) neither intraframe-coded pictures nor intraframe-coded pixel blocks are contained.

7. Apparatus for decoding encoded video data coefficients (IE) of a picture sequence, provided with:
- an entropy-decoder (EDEC) for decoding said video data coefficients to provide decoded video data coefficients;
- means (Q_{D}⁻¹, DCT_{D}⁻¹) for inversely quantising and inversely transforming said decoded video data coefficients to provide pixel difference values that were attenuated in terms of their amplitude in a corresponding encoder;
- combination means (ADDD) and means (FS_MC_D) for forming predicted pixel values derived from previous pixel difference values, the output signal of which means for forming predicted pixel values is combined in said combination means with said pixel difference values to provide block-format pixel data of said picture sequence, **characterised in that** said picture sequence contains neither intraframe-coded pictures nor intraframe-coded pixel blocks and that upon starting a decoding for the first picture, said inversely transformed (DCT_{D}⁻¹) pixel difference values are in said combination means (ADDD) combined with pixel values of a grey picture generated in said decoding apparatus.

8. Recording medium, in particular an optical disc, containing or having recorded on it a sequence of digital video data (OE) that are encoded according to the method of claim 1, wherein, when the data of said storage medium is input into a decoding apparatus according to claim 7, said data cause carrying out a method according to claim 4.

## Patentansprüche

1. Verfahren zum Kodieren einer Bildsequenz (IE), bei dem transformierte (DCT) und quantisierte (Q) Video-Daten-Koeffizienten, die aus Differenzwerten gebildet werden, die sich auf Block-Format-Pixelwerte der Bildsequenz beziehen, Entropie-kodiert (ECOD) werden, wobei die transformierten Video-Daten-Koeffizienten einer inversen Quantisierung (Q_{E}⁻¹ ) und einer inversen Transformation (DCT_{E}⁻¹) unterworfen und in vorhergesagter Form (FS_MC_E, ADDE) für die Bildung der Differenzwerte, die sich auf die Pixelwerte beziehen, verwendet werden, und wobei die vorhergesagten Pixelwerte (PMD) in ihrer Amplitude vor der Bildung (SUB) der Differenzwerte gedämpft (DU) werden, **dadurch gekennzeichnet, dass** die kodierte Bildsequenz weder Intra-Vollbild-kodierte Bilder noch Intra-Vollbild-kodierte Pixelblöcke enthält.

2. Verfahren nach Anspruch 1, bei dem die Dämpfung (DU) durch Multiplikation der vorhergesagten Pixelwerte mit einem vorbestimmten Faktor bewirkt wird.

3. Verfahren nach Anspruch 1 oder 2, bei dem die Dämpfung (DU) durch Verminderung der Absolutwerte der vorhergesagten Pixelwerte um einen vorbestimmten Faktor bewirkt wird.

4. Verfahren zum Dekodieren einer Bildsequenz, die transformierte und Inter-Vollbild-kodierte Video-Daten-Koeffizienten (ID) enthält, die aus Differenzwerten gebildet werden, die sich auf Block-Format-Pixelwerte der Bildsequenz beziehen, wobei die kodierten Video-Daten-Koeffizienten Entropie-dekodiert (EDEC), invers quantisiert (Q_{D}⁻¹ ) und invers transformiert (DCT_{D}⁻¹ ) werden, um Pixel-Differenzwerte zu erzeugen, die mit vorhergesagten (FS_MC_D Pixelwerten kombiniert (ADDD) werden, die von vorhergehenden Pixel-Differenzwerten abgeleitet werden, wobei die Differenzwerte, auf denen die transformierten Video-Daten-Koeffizienten beruhen, von vorhergesagten Pixelwerten abgeleitet werden, die in ihrer Amplitude gedämpft werden, **dadurch gekennzeichnet, dass** die Bildsequenz weder Intra-Vollbild-kodierte Bilder noch Intra-Vollbild-kodierte Pixelblöcke enthält, und dass bei Beginn einer Kodierung für das erste Bild die invers transformierten (DCT_{D}⁻¹ ) Pixel-Differenzwerte mit Pixelwerten eines von einem Dekodierer erzeugten Grau-Bildes kombiniert (ADDD) werden.

5. Verfahren nach Anspruch 4, bei dem die Block-Format-Pixelwerte Makroblöcke bilden, die Gleichstrom-Differenz-Koeffizienten enthalten und die Grau-Bild-Pixelwerte des Dekodier-Startbildes adaptiv insbesondere so bestimmt werden, dass - wenn die Gleichstrom-Differenz-Koeffizienten der Makroblock-Daten des Dekodier-Startbildes überwiegend größere positive Werte haben - die entsprechenden Start-Grauwert-Pixel so gewählt werden, dass sie dunkler sind, während - wenn die Gleichstrom-Differenz-Koeffizienten der Makroblock-Daten des Dekodierer-Startbildes überwiegend größere negative Werte haben - die entsprechenden Start-Pixel-Grauwerte so gewählt werden, dass sie heller sind.

6. Vorrichtung zum Kodieren einer Pixelsequenz (IE), die versehen ist mit:
- Mitteln (SUB) zur Bildung von Pixel-Differenzwerten, denen erste Eingangs-Block-Format-Pixeldaten der Bildsequenz zugeführt werden;
- Mitteln (DCT, Q) zum Transformieren und Quantisieren der Pixel-Differenzwerte, um Video-Daten-Koeffizienten zu erzeugen;
- einem Entropie-Kodierer (ECOD) für die Video-Daten-Koeffizienten, um kodierte Video-Daten-Koeffizienten (OE) zu erzeugen;
- Mitteln (Q_{E}⁻¹, DCT_{E}⁻¹ ) zum inversen Quantisieren und zum inversen Transformieren der Video-Daten-Koeffizienten, um rekonstruierte Pixel-Differenzwerte zu erzeugen;
- Mitteln FS_MC_E, ADDE) zur Bildung vorhergesagter Pixelwerte (PMD) aus den rekonstruierten Pixel-Differenzwerten;
- einer Dämpfungseinheit (DU) zur Dämpfung der vorhergesagten Pixelwerte (PMD), bevor sie einem zweiten Eingang der Mittel (SUB) zur Bildung der Pixel-Differenzwerte zugeführt werden,
**dadurch gekennzeichnet, dass** in den kodierten Video-Daten-Koeffizienten (OE), die von dem Entropie-Kodierer (ECOD) ausgegeben werden, weder Intra-Vollbild-kodierte Bilder noch Intra-Vollbild-kodierte Pixelblöcke enthalten sind.

7. Vorrichtung zum Dekodieren von kodierten Video-Daten-Koeffizienten (IE) einer Bildsequenz, die versehen ist mit:
- einem Entropie-Dekodierer (EDEC) zum Dekodieren der Video-Daten-Koeffizienten, um dekodierte Video-Daten-Koeffizienten zu erzeugen;
- Mitteln (Q_{D}⁻¹, DCT_{D}⁻¹ ) zum inversen Quantisieren und zum inversen Transformieren der dekodierten Video-Daten-Koeffizienten, um Pixel-Differenzwerte zu erzeugen, deren Amplitude in einem entsprechenden Kodierer gedämpft wurde;
- Kombinationsmitteln (ADDD) und Mitteln (FS_MC_D) zur Bildung vorhergesagter Pixelwerte, die von vorhergehenden Pixel-Differenzwerten abgeleitet werden, wobei das Ausgangssignal der Mittel zur Bildung der vorhergesagten Pixelwerte in den Kombinationsmitteln mit den Pixel-Differenzwerten kombiniert wird, um Block-Format-Pixeldaten der Bildsequenz zu erzeugen,
**dadurch gekenmzeichnet,** dass die Bildsequenz weder Intra-Vollbild-kodierte Bilder noch Intra-Vollbild-kodierte Pixelblöcke enthält, und dass bei Beginn einer Dekodierung für das erste Bild die invers transformierten (DCT_{D}⁻¹ ) Pixel-Differenzwerte in den Kombinationsmitteln (ADDD) mit Pixelwerten eines Grau-Bildes kombiniert werden, das in der Dekodiervorrichtung erzeugt wird.

8. Aufzeichnungsmedium, insbesondere eine optische Scheibe, das eine Sequenz von digitalen Video-Daten enthält, oder auf das eine solche Sequenz aufgezeichnet worden ist, die gemäß dem Verfahren von Anspruch 1 kodiert werden, wobei
- wenn die Daten des Speichermediums in eine Dekodiervorrichtung gemäß Anspruch 7 eingegeben werden - die Daten die Durchführung eines Verfahrens gemäß Anspruch 4 bewirken.

## Revendications

1. Procédé de codage d'une séquence d'images (IE), dans lequel des coefficients de données vidéo transformés (DCT) et quantifiés (Q) formés à partir de valeurs de différence se rapportant à des valeurs de pixels de format de bloc de la séquence d'images sont codés par entropie (ECOD), les coefficients de données vidéo transformés étant soumis à une quantification inverse (Q_{E}⁻¹) et une transformation inverse (DCT_{E}⁻¹), et étant utilisés sous forme prédite (FS_MC_E, ADDE) pour la formation des valeurs de différence se rapportant auxdites valeurs de pixels, et dans lequel les valeurs de pixels prédites (PMD) sont atténuées (DU) en terme de leur amplitude avant ladite formation (SUB) des valeurs de différence, **caractérisé en ce que** la séquence d'images codée ne contient pas d'images codées intra-image ni de blocs de pixels codés intra-image.

2. Procédé selon la revendication 1, dans lequel ladite atténuation (DU) est effectuée par multiplication desdites valeurs de pixels prédites par un facteur prédéterminé.

3. Procédé selon les revendications 1 ou 2, dans lequel ladite atténuation (DU) est effectuée par réduction des valeurs absolues desdites valeurs de pixels prédites par un facteur prédéterminé.

4. Procédé de décodage d'une séquence d'images contenant des coefficients de données vidéo transformés et codés inter-images (ID) formés à partir de valeurs de différence se rapportant à des valeurs de pixels de format de bloc de ladite séquence d'images, dans lequel lesdits coefficients de données vidéo codés sont décodés par entropie (EDEC), soumis à une quantification inverse (Q_{D}⁻¹) et à une transformation inverse (DCT_{D}⁻¹) pour fournir des valeurs de différence de pixels qui sont combinées (ADDD) à des valeurs de pixels prédites (FS_MC_D) dérivées de valeurs de différence de pixels antérieures, dans lequel lesdites valeurs de différence sur lesquelles sont basés lesdits coefficients de données vidéo transformés et codés sont dérivées de valeurs de pixels prédites qui ont été atténuées en terme de leur amplitude, **caractérisé en ce que** ladite séquence d'images codée ne contient ni d'images codées intra-image ni de blocs de pixels codés intra-image et **en ce qu'**au début du décodage de la première image, lesdites valeurs de différence de pixels ayant subies une transformation inverse (DCT_{D}⁻¹) sont combinées (ADDD) à des valeurs de pixels d'une image de gris générée par le décodeur.

5. Procédé selon la revendication 4, dans lequel lesdites valeurs de pixels de format de bloc provenant de macroblocs contenant des coefficients de différence DC et lesdites valeurs de pixels d'image de gris de l'image de début de décodage sont déterminées de manière adaptative en particulier de telle sorte que, si les coefficients de différence DC des données de macrobloc de l'image de début de décodage ont des valeurs positives essentiellement plus grandes, les valeurs de pixels d'échelle de gris de début correspondantes sont choisies plus sombres tendis que si les coefficients de différence DC des données de macrobloc de l'image de début de décodage ont des valeurs négatives essentiellement plus grandes, les valeurs de pixels d'échelle de gris de début correspondantes sont choisies plus claires.

6. Dispositif pour coder une séquence d'images (IE), doté :
- d'un moyen (SUB) pour former les valeurs de différence de pixels, à la première entrée duquel sont alimentées des données de pixels de format de bloc de ladite séquence ;
- de moyens (DCT, Q) pour transformer et quantifier lesdites valeurs de différence de pixels afin de fournir des coefficients de données vidéo ;
- d'un codeur par entropie (ECOD) desdits coefficients de données vidéo afin de fournir des coefficients de données vidéo codés (OE) ;
- de moyens (Q_{E}⁻¹, DCT_{E}⁻¹) pour effectuer une quantification inverse et une transformation inverse desdits coefficients de données vidéo pour fournir des valeurs de différence de pixels reconstruites ;
- de moyens (FS_MC_E, ADDE) pour former des valeurs de données prédites (PMD) à partir desdites valeurs de différence de pixels reconstruites ;
- d'une unité d'atténuation (DU) pour atténuer lesdites valeurs de pixels prédites (PMD) avant leur passage à une deuxième entrée dudit moyen (SUB) pour former des valeurs de différence de pixels, **caractérisé en ce que** dans les coefficients de données vidéo codés (OE) sortis dudit codeur par entropie (ECOD) aucune image codée intra-image ni aucun bloc de pixels codé intra-image ne sont contenus.

7. Dispositif pour décoder des coefficients de données vidéo codés (IE) d'une séquence d'images, doté :
- d'un décodeur par entropie (EDEC) pour décoder lesdits coefficients de données vidéo afin de fournir des coefficients de données vidéo décodés;
- de moyens (Q_{D}⁻¹, DCT_{D}⁻¹) pour effectuer une quantification inverse et une transformation inverse desdits coefficients de données vidéo décodés afin de fournir des valeurs de différence de pixels qui ont été atténuées en termes de leur amplitude dans un codeur correspondant ;
- d'un moyen de combinaison (ADDD) et d'un moyen (FS_MC_D) pour former des valeurs de pixels prédites dérivées de valeurs de différence de pixels antérieures, le signal de sortie dudit moyen de formation de valeurs de pixels prédites est combiné dans ledit moyen de combinaison auxdites valeurs de différence de pixels afin de fournir des données de pixels de format de bloc de ladite séquence d'images, **caractérisé en ce que** ladite séquence d'images ne contient ni d'images codées intra-image, ni de blocs de pixels codés intra-image et qu'au début d'un décodage de la première image, lesdites valeurs de différence de pixels ayant subi une transformation inverse (DCT_{D}⁻¹) se trouvent dans ledit moyen de combinaison (ADDD) combinées aux valeurs de pixels d'une image de gris générée dans ledit dispositif de décodage.

8. Support d'enregistrement, en particulier un disque optique, contenant ou sur lequel est enregistrée une séquence de données vidéo numériques (OE) qui sont codées conformément au procédé de la revendication 1, dans lequel, quand les données dudit support de mémorisation sont entrées dans un dispositif de décodage selon la revendication 7, lesdites données entraînent l'exécution d'un procédé conformément à la revendication 4.
